# EUROPEAN PATENT SPECIFICATION

(11) **EP 1 553 037 B1**
(45) Date of publication and mention of the grant of the patent: **27.05.2009**
(21) Application number: 04028857.3
(22) Date of filing: 06.12.2004
(51) Int. Cl.: B65H 61/00, G01P 3/68

(54) **Winding device of spun yarn**
Aufwickelvorrichtung für gesponnenes Garn
Dispositif de bobinage de filé

(30) Priority: 06.01.2004 JP 2004000870
(43) Date of publication of application: 13.07.2005
(73) Proprietor: MURATA KIKAI KABUSHIKI KAISHA, Kyoto (JP)
(72) Inventor: Kubota, Norio, Fushimi-ku Kyoto-shi Kyoto (KP); Ito, Makoto, Otsu-shi Shiga (JP)
(74) Representative: Gritschneder, Martin

(56) References cited:
- CH-A- 669 777
- DE-A1- 19 900 581
- JP-A- 53 042 871
- BACKMANN R ET AL: "BERUEHRUNGSLOSE GESCHWINDIGKEITSMESSUNG AM LAUFENDEN FADEN" MELLIAND TEXTILBERICHTE, INTERNATIONAL TEXTILE REPORTS, MELLIAND TEXTILBERICHTE K.G. HEIDELBERG, DE, vol. 74, no. 7, 1 July 1993 (1993-07-01), pages 639-640, XP000377924 ISSN: 0341-0781
- PATENT ABSTRACTS OF JAPAN vol. 006, no. 258 (P-163), 17 December 1982 (1982-12-17) & JP 57 154220 A (SUTEO TSUTSUMI; others: 01), 24 September 1982 (1982-09-24)
- PATENT ABSTRACTS OF JAPAN vol. 1998, no. 07, 31 March 1998 (1998-03-31) & JP 06 186242 A (BEE SHIYURAAFUHORUSUTO & CO), 8 July 1994 (1994-07-08) & EP 0 582 112 A (W. SCHLAFHORST AG & CO) 9 February 1994 (1994-02-09)
- PATENT ABSTRACTS OF JAPAN vol. 1998, no. 07, 31 March 1998 (1998-03-31) & JP 08 105909 A (BEE SHIYURAAFUHORUSUTO & CO), 23 April 1996 (1996-04-23) & DE 44 34 234 A1 (W. SCHLAFHORST AG & CO, 41061 MOENCHENGLADBACH, DE; W. SCHLAFHORST AG) 28 March 1996 (1996-03-28)

## Description

This invention relates to a winding device which winds a spun yarn while measuring a speed of the traveling spun yarn.

With respect to a winding device or the like in which a spinning yarn is moved in its length direction and successively wound thereon, in most cases, a device, which monitors the traveling speed and the yarn length of the yarn to be wound, is attached thereto. This is based on the fact that, as described below, there has been a demand that a package, which is formed by winding such a yarn thereon, should be controlled so as to have the same yarn length as accurately as possible (yarn length control).

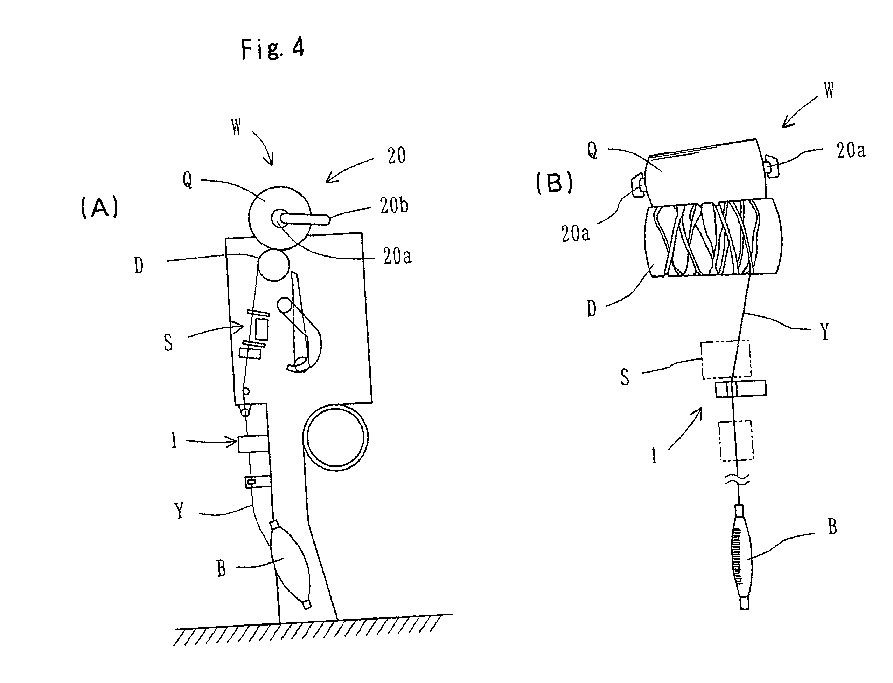

For example, in a yarn length observer in an automatic winder W shown in Fig. 4 as will be described later, conventionally, by using a value calculated based upon a yarn traveling signal and a rotation pulse of a traverse drum D, the yarn length that has been wound around a package Q is estimated, that is, the rotation pulses of the traverse drum D are counted by a counter in an accumulated manner from the winding start point of the yarn Y onto a take up tube (core tube) of the package Q, and when a predetermined number of these pulses have been detected, the winding process onto the package is completed as a fully wound state; however, since there are factors such as slips between the traverse drum D and the package Q that are respectively rotated while being made in contact with each other, the estimated value of the yarn length is not necessarily an accurate value. In this state, the length of a yarn that has been actually wound on each of the packages Q is not necessarily constant, resulting in deviations in the yarn length in the respective packages Q, which are not ignorable; therefore, in post processes such as a warping process, some yarns tend to be left in the take up tube of each of the packages Q, and the resulting problems are that extra time and labor are required for disposing these yarns and that, in the case of expensive yarns, such unnecessary yarns are very wasteful to cause serious losses from the economic point of view. For this reason, there have been strong demands for accurate yarn length control for a yarn to be actually wound on each of the packages Q so as to eliminate such extra labor and wastefulness.

Under such circumstances, for example, Japanese Patent Application Laid-Open No. 06-186242 and Japanese Patent Application Laid-Open No. 08-105909 have proposed devices to be used for accurately measuring a traveling speed of a spun yarn in which: two sensors are placed with a fixed interval on front and rear sides from each other in the traveling direction of the yarn in a non-contact state with the yarn; thus, measured values from these two sensors are evaluated by a traveling-time correlator, and based upon the results, the traveling speed of the yarn is obtained, based upon the speed and winding time thus found, the yarn length wound around the winding tube of the package is detected in an accumulating manner from the winding start time on the package by using an integrator or the like. In such a two-point type speed-measuring device, however, complex calculating processes are required upon finding an actual traveling speed of the yarn from the two sensor signals, with the result that a high-speed, high-performance CPU is required so as to prevent a delay in calculations. Moreover, in order to achieve a high winding speed corresponding to a currently-applied high-speed device such as an automatic winder, it is necessary to use an expensive CPU so as to process complex calculations at high speeds, inevitably resulting in high costs in the speed-measuring device of the yarn in an attempt to achieve a higher winding speed.

CH 669 777 A5 describes a device for measuring the length of a moving yarn, wherein the yarn moves,with a constant or periodically changing speed, and wherein a signal is generated which is proportional to the speed. The signal is scanned and at least one signal value is assigned to each scanning interval. The yarn length is measured by determining the partial length of the yarn in each scanning interval and summing the partial length of all scanning intervals.

BACKMANN, R., et al.: "Berührungslose Geschwindigkeitsmessung am laufenden Faden" (Melliand Textilberichte, International Textile Reports, Melliand Textilberichte K.G. Heidelberg, DE, vol. 74, no. 7, 1 July 1993, pages 639-640, XP 000 377 924, ISSN: 0341-0781) discloses a winding device, which winds a spun yarn while measuring a speed of a traveling spun yarn, comprising a device, which measures the speed of the spun yarn and comprises:
- a laser,
- a beam expander,
- a filter path with two converging lenses in 4-f-arrangement and a high-pass filter between them, and
- a CCD line-scan camera that converts incident light to an electric signal.

The beam emitted by the laser is expanded by the beam expander into a parallel beam of 10 mm diameter. This expanded beam is applied to the spun yarn and then passes the filter path so as to project an image on the CCD line-scan camera. The high-pass filter is placed in the focal plane between the two converging lenses and the CCD line-scan camera is placed in the image plane, so that a spatial frequency filtering is performed. The speed of the traveling spun yarn is calculated on the basis of the electric signal of the CCD line-scan camera.

DE 199 00 581 A1 discloses a speed measuring device which measures the speed of a traveling yarn and comprises:
- a grid-shaped electrode unit with parallel grid bars that are placed with equal intervals in a yarn traveling direction.

The electrode unit converts an electrostatic charge on the traveling yarn to an electric signal. The speed of the traveling yarn is calculated on the basis of the electric signal.

JP 53 042871 A shows that light from an object passes through a lens to a light-receiving device, which comprises elements arranged in equal intervals. The lens is arranged between the object and the light-receiving device.

### DISCLOSURE OF THE INVENTION

The objective of the present invention is to provide a winding device of a spun yarn, which has a simple structure at low costs, and also measures the traveling speed of a fabric product, such as, in particular, a spun yarn, with high precision.

In order to solve the above-mentioned problems, after having made various trials and errors, the inventors, etc. of the present invention have found that, since a number of fluffs are located on the surface of a spun yarn with proper intervals in the length direction, when such a spun yarn is allowed to travel with its image being projected onto light-receiving elements that are placed in the yarn traveling direction with equal intervals, the shadow with a density corresponding to the amount of the fluffs, which appears on the light-receiving elements, is also allowed to move in the same manner, with the result that a photocurrent to be outputted from each of the light-receiving elements changes in response to a difference in the density, that, when this change is processed by using a so-called spatial filter principle (see Japanese Patent Application Laid-Open No. 47-13964 and ) Japanese Patent Application Publication No. 06-19365), the speed detection principle of the above-mentioned spatial filter system becomes applicable upon measuring the traveling speed of the spinning yarn, and that this process makes it possible to measure the traveling speed of the spinning yarn with high precision in a non-contact state; thus, the present invention has been achieved.

The present invention provides a winding device according to claim 1, which winds a spun yarn while measuring a speed of a traveling spun yarn, comprising a device, which measures the speed of the spun yarn and comprises:
- light-receiving elements that are placed with equal intervals in a yarn traveling direction and convert incident light to an electric signal; and
- a projection light source that applies light to the spun yarn through a diffusing lens so as to project an image on the light-receiving elements,
wherein, when the spun yarn, which has a number of fluffs the appearance of which is projected on the light-receiving elements, travels, based upon a change in a photocurrent, caused in response to the amount of fluffs, that occurs in the light-receiving elements, the speed of the traveling spun yarn is found, with the light-receiving elements being allowed to generate an electrical output that cyclically changes each time the light-receiving elements and the yarn are relatively moved by a predetermined pitch corresponding to the layout interval of the light-receiving elements, so that the device forms a spatial filter type speed detector that is arranged to find a speed of the traveling yarn by using the electrical output.

Further features and embodiments of this invention are described in the dependent claims.

It may be provided that the winding device has a structure in which a yarn length of the wound spinning yarn is found by using the measured traveling speed of the spinning yarn and winding time required for winding the yarn so that the yarn length is regulated to a predetermined length.

### BRIEF DESCRIPTION OF THE DRAWINGS

Fig. 1 is a conceptual drawing that shows a measuring principle of a traveling speed of a spinning yarn in a winding device of the present invention.
Fig. 2 is a front view that shows a structural example of a speed-measuring device installed in the winding device of the present invention.
Fig. 3 is a drawing that shows one example of a winding device of a spinning yarn in which the speed-measuring device, shown in Fig. 2, is installed.
Fig. 4 is a drawing that shows a schematic structure of an automatic winder that is one example to which the present invention is applied.
Fig. 5 is a drawing that shows another example of a layout and a line-connecting relationship of light-receiving elements.
Fig. 6 is a drawing that shows a transfer function characteristic curve that indicates performance of light-receiving elements that are aligned with equal intervals as a spatial filter.

### DETAILED DESCRIPTION OF THE INVENTION

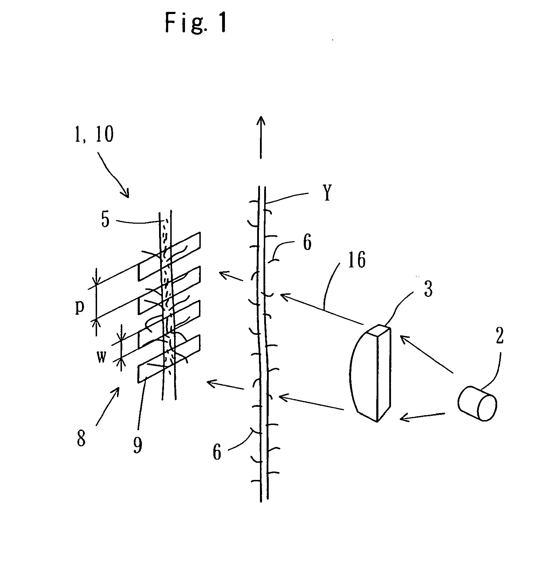

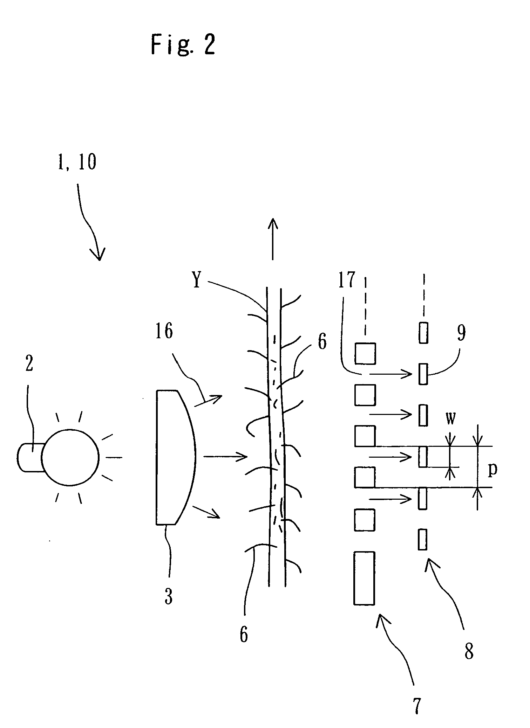

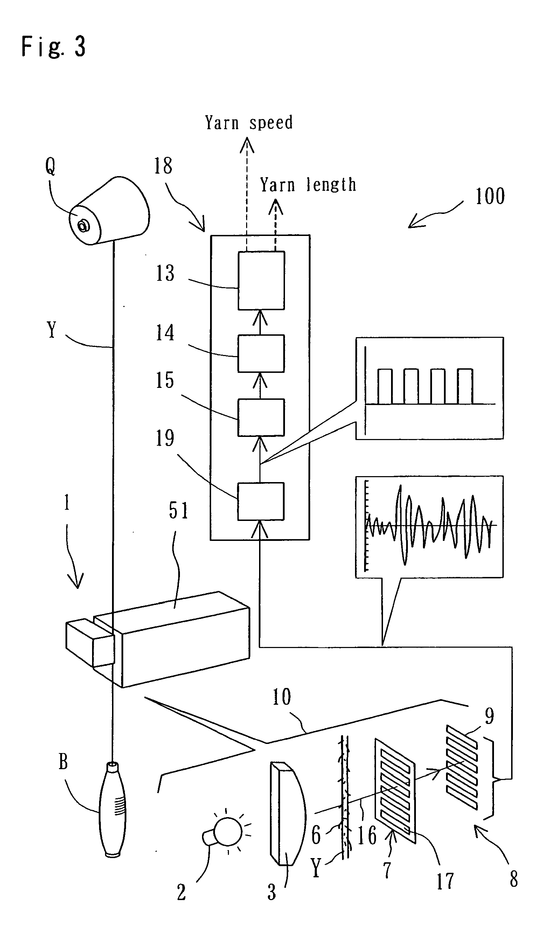

Referring to Figs. 1 to 6, the following description will discuss one embodiment of the present invention. Here, in Figs. 2 and 3, openings 17, formed in a slit 7, are allowed to correspond to layout positions of respective light-receiving elements 9.

A traveling-speed measuring device (yarn speed sensor) 1 of a yarn to be installed in a winding device of the present invention is an optical system, and in this arrangement, when a yarn Y, which has a number of fluffs 6 the appearance of which is projected on the light-receiving elements 9, travels, a change in a photocurrent occurs, and this change is processed by using a so-called spatial filter principle so that, based upon the resulting value, the traveling speed and the yarn length are calculated. Here, with respect to a general spatial filter type speed detection system, a plurality of strap-shaped light-receiving elements are aligned in a comb shape with equal intervals to form a pair of detectors; thus, a cyclic change in an electrical output that is detected each time a pattern or each portion of optical irregularities of the measured object, which appears on the light-receiving face of each of the light receiving elements, crosses the light-receiving element is observed and the number of repetitions within a specific time period is counted so that this is multiplied by a predetermined pitch corresponding to the layout pitch of the light-receiving elements; thus, the amount of movement and the speed of movement of the measured object (pattern or optical irregularities) in a direction virtually orthogonal to each of the light-receiving elements are found. In this case, the electrical output from the detector cyclically changes by a predetermined pitch corresponding to the layout pitch of the light-receiving elements each time the measured object and the detector are relatively moved. This phenomenon is caused by a narrow bandpass characteristic possessed by a transfer function of each of the light-receiving elements aligned with equal intervals as a spatial filter.

As has been conventionally known, when a spun yarn Y is put in a light path and viewed through transmitted light, a number of fluffs 6 are seen on the surface as shown in Fig. 1. When such a yarn is put on a light-receiving device 8 constituted by a plurality of light-receiving elements 9 aligned with equal intervals, and irradiated with light directed from the opposite side as shown in Fig. 1, the spun yarn Y and its fluffs 6 are reflected on each of the light-receiving elements 9 as a shadow 5. At this time, a density difference in the shadow resulting from different amounts of fluffs 6 occurs on each of the light-receiving element 9. In the present embodiment, light from the light source 2 is applied to the spun yarn Y through a diffusing lens 3. The light-receiving elements 9, each having a strap-shape having virtually the same width w, have the same photoelectric conversion characteristic, and in this example, these are connected in such a manner that outputs from the adj acent elements are taken out as one lot. Here, the layout pitch p of the light-receiving elements 9 aligned with equal intervals is set to an interval that is preliminarily presumed as a repeated pattern of the fluffs 6 located in the yarn length direction. Since there are a number of these patterns of the fluffs 6 and the like, these are statistically averaged when the traveling spun yarn Y is observed, and regarded as a repeated pattern with a predetermined interval. For example, in the present embodiment, the respective light-receiving elements 9 are aligned with a pitch of about 5 mm.

Next, a slit 7 having openings 17 that correspond to layout positions of the respective light-receiving elements 9 is placed between the yarn Y and the light-receiving device 8 (respective light-receiving elements 9), as shown in Fig. 2, in order to prevent unnecessary diffused light or the like from being made incident thereon, and the following description will describe a case in which the yarn Y is allowed to travel in this state. When the yarn Y travels, the density difference of the shadow corresponding to the amounts of the fluffs 6 appearing on each of the light-receiving elements 9 also moves. At this time, the photocurrent outputted from the light-receiving elements 9 is changed due to the density difference . Here, among light rays 16 that proceed toward the light-receiving elements 9, those which represent the density difference of shadows having a comparatively small interval and the density difference of shadows having a comparatively large interval, with respect the layout pitch of the openings 17 of the slit 7, hardly appear on each of the element as a change in photocurrent; in contrast, those which represent the density difference of shadows having an interval (that is, a preliminarily assumed value as the layout interval between the fluffs 6, located in the yarn length direction) fits to the layout pitch of the openings 17 of the slit 7 cause a great change in the photocurrent in each of the elements (narrow bandpass characteristic possessed by a transfer function of a slit serving as a spatial filter or light-receiving elements aligned with equal intervals). In other words, the signal, extracted from the light-receiving elements 9, corresponds to a signal formed by extracting only the density difference of the shadow of a specific interval (the value preliminarily assumed as the repetitive pattern of the fluffs 6) that is determined by the optical system 10 and the layout of the light-receiving elements 9. As shown in Fig. 3, the signal, obtained by the light-receiving elements 9, is waveform-shaped through a bandpass filter 19 in an operation unit 18 that is placed on the succeeding step of the light-receiving elements 9, and converted to a pulse train, and the number of pulses thereof is then counted by using a counter 15. In the case when the speed of the traveling yarn Y is low, the number of pulses counted in the specific period is small, while as the speed increases, the number of pulses to be counted in the specific period increases. Therefore, since this signal is derived from the density difference of shadows having intervals that have preliminarily set as the layout interval of the fluffs 6, it is possible to find the traveling speed of the spinning yarn Y and the yarn length by multiplying the value of the number of pulses counted in the specific period by the interval preliminarily set as the repetitive pattern of the fluffs 6, that is, the layout pitch of the openings 17 of the slit 7.

In other words, in the spatial filter type speed detector having the above-mentioned structure, by finding the frequency of the output signal from the light-receiving elements 9 that is continuously obtained on the time axis, it is possible to find the moving speed of the object through calculations based upon the frequency. That is, supposing that the frequency of the output signal from the light-receiving elements 9 continuously obtained on the time axis is µ and that the layout pitch of the openings 17 of the slit 7 is p, the traveling speed v of the yarn Y is found from an equation, µ = v/p. Therefore, for example, when there are light-receiving elements 9 having a layout pitch of p = 1 mm, and when it is found that the output signal from the light-receiving elements 9 successively obtained on the time axis has a frequency of µ = 1 kHz, the traveling speed of the yarn Y is calculated to be 1m/sec through calculations based upon the above-mentioned equation. The traveling speed and yarn length of the spun yarn Y, found in this manner, are subjected to various processes in a control unit 14, and are then displayed on a display unit 13.

In the yarn speed sensor 1 installed in the winding device of the present invention, the amount of movement of the yarn is measured based upon the above-mentioned detection principle. As can be clearly understood from the above explanations, from the sensual point of view, the yarn traveling speed measuring device of the spatial filter system, installed in the winding device of the present invention, is regarded as a system utilizing a phenomenon in which, when a human walking outside is viewed from the inside of a house through a reed bamboo blind, the human is partially viewed and shielded to appear as bright and dark portions of light.

### [Embodiment 1]

The following description will discuss one embodiment of the present invention in which the speed measuring device having the above-mentioned is installed in an automatic winder W shown in Fig. 4. Here, the automatic winder W is a yarn-winding machine to be used in a finishing process of a spinning machine as well as in a preparing process for weaving and knitting operations, and the objective of this machine is to wind a spun yarn Y that has been wound around a spinning bobbin B in a spinning frame, not shown, in a preceding stage into a cone shape with a large size at high speeds, while removing portions causing defective yarn irregularities so as to be appropriately used in the succeeding stage.

Fig. 4(A) shows the right side face of the automatic winder W and Fig. 4 (B) shows the front face including the main portion thereof, and the automatic winder W, which releases the yarn Y from the spinning bobbin B and again winds it as a package Q, is designed so that the yarn Y is released from the spinning bobbin B placed at a lower position, and sent upward; thus, the yarn Y is wound around the package Q so as to reach a predetermined diameter while being traversed by a traverse drum D. The package Q is supported by a cradle 20. On this cradle 20, the two sides of the package Q are fitted to and supported by bearing centers 20a and the bearing centers 20a are held by supporting arms 20b. Moreover, in the automatic winder W, a splicing device S is installed in the middle of a traveling passage of the yarn so that defective portions causing yarn irregularities can be removed as described above. In this automatic winder W, the traverse drum D and the package Q are installed in parallel with each other, with being made in press-contact with each other; thus, the rotation of the traverse drum D serves as a driving source so that the package Q is driven to rotate.

With respect to the speed-measuring device of a spun yarn to be installed in the automatic winder W of the present embodiment, the structure and the operations thereof have been explained in the above-mentioned "Detailed Description of the Invention" by reference to Figs. 1 to 3 . Therefore, in accordance with the automatic winder of the present embodiment in which the speed-measuring device of a spun yarn of the spatial filter type is installed, it becomes possible to accurately measure the traveling speed of the spun yarn. Moreover, by using the traveling speed and winding time of the yarn thus measured, it becomes possible to find the yarn length that has been wound around the package Q from the winding start point to the fully wound state. Thus, in accordance with the present invention, it becomes possible to accurately specify the yarn length wound around the package Q, and consequently to carry out yarn length control. For example, in the case when a yarn length controlling device installed in a conventional automatic winder is used, the yarn length, wound around a package, tends to have deviations of about ± 1 % per package, although it depends on types of yarns and the like; however, in accordance with the automatic winder in which the speed-measuring device of a spun yarn of the spatial filter type is installed, the deviations can be reduced to a range within about ± 0.3 % per package.

In this manner, the automatic winder of the present embodiment makes it possible to provide a package on which a yarn having a predetermined length has been wound; therefore, even in post-processes such as a warping process, it becomes possible to prevent some yarns from remaining in each of the packages, and consequently to eliminate wasteful use of yarns.

The above-mentioned embodiment of the present invention has mainly discussed the structure for carrying out speed-measurements of a spun yarn to be wound by the automatic winder; however, the present invention is not intended to be limitedbytheabove-mentionedembodiment, andvariousdesigning modifications can be made. For example, not limited to the automatic winder, the speed-measuring device, installed in the winding device of a spun yarn of the present invention, can be applied to various winding devices, such as a false twisting machine and a two-for-one twisting machine. The yarn length that has been wound around the package Q from the winding start point to the fully wound state can be found by using the measured traveling speed and winding time of the yarn; and, moreover, another structure in which, based upon these values, the yarn length is found in an accumulating manner by using an integrator or the like may be proposed.

With respect to the optical system 10 of the speed-measuring device 1, a light-shielding plate with through holes to be used for preventing diffused light from being made incident thereon may be further placed between the traveling yarn Y and the slit 7, and in the same manner as a generally-used spatial filter type speed detector, an objective lens may be further placed between the traveling yarn Y to be measured and the slit 7. With respect to the shape of the respective light-receiving elements 9 to be placed on the succeeding stage to the slit 7, not limited to the above-mentioned shape, a shape, for example, disclosed in Japanese Patent Application Publication No. 62-34107, may be adopted. With respect to the layout pitch of the openings 17 of the slit 7 or the respective light-receiving elements 9 also, it is not intended to be limited by the above-exemplified value. Moreover, in the above-mentioned examples, the slit 7, which has the openings 17 corresponding to the layout positions of the respective light-receiving elements 9, is placed between the object to be measured and the light-receiving elements 9; however, even when the slit is omitted, it is possible to measure the moving speed of the object. In addition to these, with respect to the spatial filter type speed detection system itself, currently, various improvements have been made; therefore, these improved systems may be applied to the speed-measuring device 1 of a spun yarn in the winding device of the present invention so that the measuring precision of the speed-measuring device 1 can be further improved.

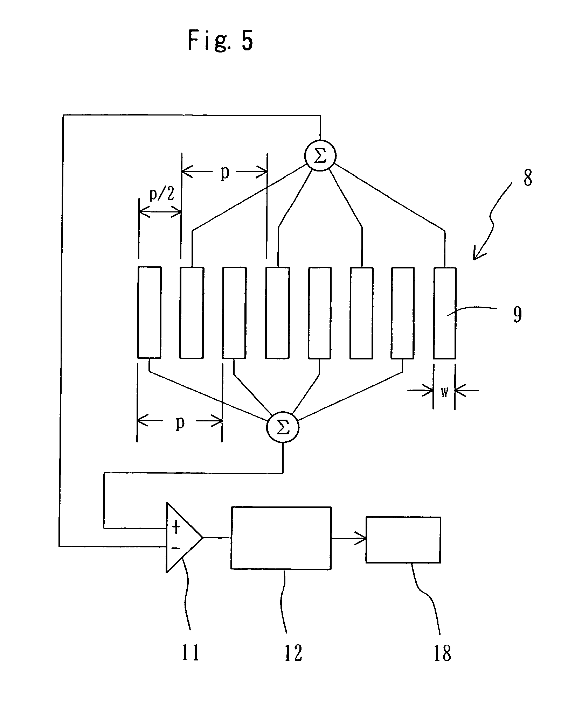

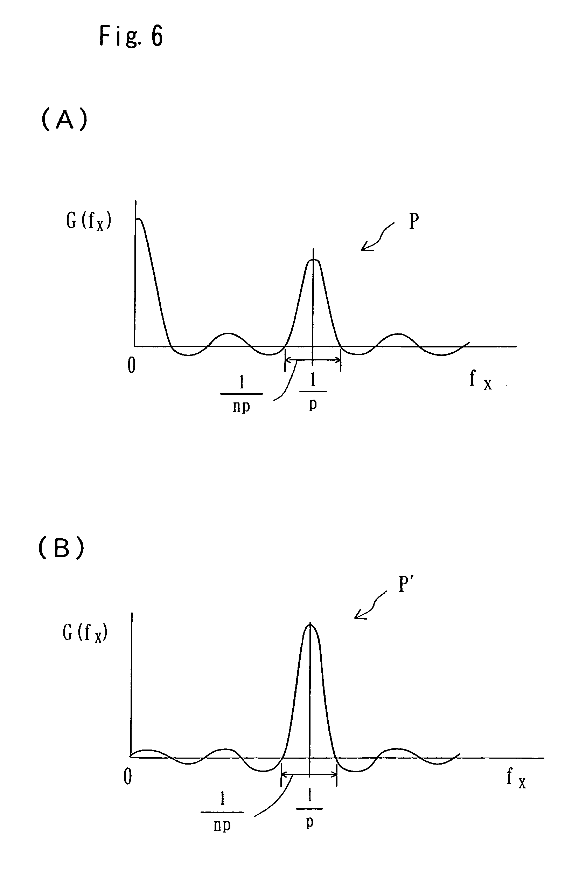

For example, in the above-mentioned embodiments, a plurality of light-receiving elements 9 are aligned with equal intervals in a comb shape to form a pair of light-receiving devices 8, and these are used as the spatial filter detector; however, by taking it into consideration that such a pair of comb-shaped detectors have dc components contained in the output, a differential spatial filter detector as shown in Fig. 5, in which two pairs of comb-shaped detectors are engaged with each other, may be used in order to remove the dc components. In the example shown in Fig. 5, the layout pitch of the light-receiving elements 9 that constitute each of the pairs is indicated by p and the width of each of the light-receiving elements is indicated by w. Outputs, obtained from the respective detectors, are inputted to a differential amplifier 11, and after having been amplified by an amplifier 12, these are further inputted to the operation unit 18 that has been described earlier. As shown by Fig. 6 that is next explained, in accordance with the differential spatial filter detector, it is possible to improve the bandpass characteristic in a low frequency band as indicated by a transfer function characteristic curve representing the performance of the light-receiving elements aligned with equal intervals as a spatial filter (see Fig. 6 (B)) so that a transfer function curve that has no low frequency pass characteristic is formed. As has been explained by Japanese Patent Application Laid-Open No. 47-13964 and the like, in the case when a differential spatial filter detector having such a transfer function characteristic curve is used, even if the traveling speed of the object is low, the speed can be measured accurately; therefore, even in a device, such as an automatic winder W, where a plurality of spinning bobbins B are used until one package P has been fully wound, with exchanging processes thereof being carried out a plurality of times in the middle of the process, the measurements of the traveling speed of the yarn and the specifying process of the yarn length are carried out further accurately.

Here, Fig. 6 shows transfer function characteristic curves P and P' that indicate performances of the light-receiving elements that are aligned with equal intervals as a spatial filter. Fig. 6(A) shows the transfer function characteristic curve P that is possessed by a pair of comb-shaped detectors serving as a spatial filter, which are used in the respective examples, and Fig. 6 (B) shows the transfer function characteristic curve P' of the differential spatial filter detector. Here, G(fx) represents a transfer function that indicates performance of the light-receiving elements aligned with equal intervals as a spatial filter, and fx represents a spatial frequency [cycle/centimeter] in the moving direction (x direction) of the object. As clearly indicated by the transfer function characteristic curve P' of Fig. 6 (B) , the differential spatial filter detector makes it possible to exclude a bandpass characteristic in the low frequency band, with the narrow bandpass characteristic possessed by the transfer function of the light-receiving elements aligned with equal intervals as a spatial filter being maintained as it is. Here, the narrow bandpass characteristic has 1/p as a central spatial frequency and 1/np as a bandwidth. Further, p represents a layout pitch of the light-receiving elements constituting each of the pair, and n represents the total number of the light-receiving elements constituting each of the pair.

As clearly described above, the present invention makes it possible to provide a winding device of a spun yarn having a speed-measuring device which has an inexpensive, simple and accurate structure in which the basic principle of a spatial filter capable of optically measuring a speed of an object in a non-contact state is utilized.

### [Industrial Applicability]

In accordance with the present invention, the traveling speed of a spun yarn can be measure with high precision in a non-contact state, and by using the resulting value, the yarn length, wound around a package, is calculated so that an accurate yarn length controlling process can be carried out. Further, it becomes possible to provide packages each of which has a yarn with a predetermined length wound thereon; therefore, even in the post processes such as a warping process, it becomes possible to prevent some yarns from remaining in each of the packages, and consequently to eliminate wasteful use of yarns. Moreover, upon finding the traveling speed of a yarn from a sensor output signal, it is possible to simplify the corresponding calculations so that, even in an attempt to provide a high winding speed in various winding devices such as automatic winders, it becomes possible to reduce occurrence of a delay in calculations.
Consequently, since it is possible to easily satisfy the demand for a high-winding speed and also to carry out calculating processes for the traveling speed of a yarn without the necessity of using an expensive CPU so as to carry out complex calculations at high speeds, it becomes possible to suppress an increase in costs required for achieving a high winding speed.

## Claims

1. A winding device, which winds a spun yarn (Y) while measuring a speed of the traveling spun yarn (Y), comprising a device (1), which measures the speed of the spun yarn (Y), **characterized in that** it comprises
- light-receiving elements (9) that are placed with equal intervals (p) in a yarn traveling direction and convert incident light (16) to an electric signal; and
- a projection light source (2) that applies light (16) to the spun yarn (Y) through a diffusing lens (3) so as to project an image (5) of the spun yarn (Y) on the light-receiving elements (9),
wherein, when the spun yarn (y) having a number of fluffs (6) the appearance of which is projected on the light-receiving elements (9) travels, based upon a change in a photocurrent, caused in response to the amount of fluffs (6), that occurs in the light-receiving elements (9), the speed of the traveling spinning yarn (Y) is found, with the light-receiving elements (9) being allowed to generate an electrical output that cyclically changes each time the light-receiving elements (9) and the spun yarn (Y) are relatively moved by a predetermined pitch corresponding to the layout interval (p) of the light-receiving elements (9), so that the device (1) forms a spatial filter type speed detector that is arranged to find a speed of the traveling spun yarn (Y) by using the electrical output.

2. The winding device according to claim 1, wherein: a yarn length of the wound spun yarn (Y) is found by using the measured traveling speed of the spun yarn (Y) and winding time required for winding the spun yarn (Y) so that the yarn length is regulated to a predetermined length.

## Patentansprüche

1. Aufwickelvorrichtung, die ein Spinnfasergarn (Y) aufwickelt, während eine Geschwindigkeit des laufenden Spinnfasergarns (Y) gemessen wird, umfassend eine Vorrichtung (1), die die Geschwindigkeit des Spinnfasergarns (Y) misst, **dadurch gekennzeichnet, dass** sie umfasst:
- Lichtempfangselemente (9), die mit gleichen Intervallen (p) in einer Garnlaufrichtung platziert sind und Auflicht (16) in ein elektrisches Signal umwandeln; und
- eine Projektionslichtquelle (2), die Licht (16) auf das Spinnfasergarn (Y) durch eine Diffuserlinse (3) aufbringt, um ein Bild (5) des Spinnfasergarns (Y) auf die Lichtempfangselemente (9) zu projizieren,
wobei, wenn das Spinnfasergarn (y), das eine Anzahl von Fusseln (6) aufweist, deren äußere Erscheinung auf die Lichtempfangselemente (9) projiziert wird, läuft, auf Grundlage einer ansprechend auf die Menge von Fusseln (6) verursachten Änderung in einem Fotostrom, die in den Lichtempfangselementen (9) auftritt, die Geschwindigkeit des laufenden Spinngarns (Y) ermittelt wird, wobei ermöglicht wird, dass die Lichtempfangselemente (9) ein elektrisches Ausgangssignal erzeugen, das sich jedes Mal zyklisch ändert, wenn die Lichtempfangselemente (9) und das Spinnfasergarn (Y) um einen vorbestimmten Abstand entsprechend dem Layoutintervall (p) der Lichtempfangselemente (9) relativ bewegt werden, so dass die Vorrichtung (1) einen Geschwindigkeitsdetektor vom Ortsfiltertyp bildet, der angeordnet ist, um eine Geschwindigkeit des laufenden Spinnfasergarns (Y) zu ermitteln, indem das elektrische Ausgangssignal verwendet wird.

2. Aufwickelvorrichtung nach Anspruch 1, bei der: eine Garnlänge des aufgewickelten Spinnfasergarns (Y) ermittelt wird, indem die gemessene Laufgeschwindigkeit des Spinnfasergarns (Y) und die Aufwickelzeit, die zum Aufwickeln des Spinnfasergarns (Y) erforderlich ist, verwendet werden, so dass die Garnlänge auf eine vorbestimmte Länge geregelt wird.

## Revendications

1. Dispositif d'enroulement qui enroule un filé (Y) tout en mesurant une vitesse de filé en mouvement (Y), comprenant un dispositif (1) qui mesure la vitesse dudit filé (Y), **caractérisé en ce qu'**il comprend :
- des éléments photorécepteurs (9) qui sont placés à intervalles égaux (p) dans un sens de mouvement de fil et qui convertissent la lumière incidente (16) en un signal électrique ; et
- une source de lumière projetée (2) qui applique de la lumière (16) au filé (Y) par une lentille diffusante (3) afin de projeter une image (5) du filé (Y) sur les éléments photorécepteurs (9),
dans lequel, quand le filé (Y) possédant un certain nombre de peluches (6) dont l'aspect est projeté sur les éléments photorécepteurs (9) se déplace en fonction d'un changement dans un photocourant produit en réaction à la quantité de peluches (6) qui intervient sur les éléments photorécepteurs (9), la vitesse du filé en mouvement (Y) est déterminée, les éléments photorécepteurs (9) pouvant générer une sortie électrique qui change cycliquement chaque fois que les éléments photorécepteurs (9) et le filé (Y) sont déplacés relativement sur un pas prédéterminé correspondant à l'intervalle d'agencement (p) des éléments photorécepteurs (9), de manière que le dispositif (1) constitue un détecteur de vitesse à filtre spatial agencé pour déterminer une vitesse du filé en mouvement (Y) en utilisant ladite sortie électrique.

2. Dispositif d'enroulement selon la revendication 1 dans lequel une longueur de filé enroulé (Y) est déterminée en utilisant la vitesse de mouvement mesurée du filé (Y) et le temps d'enroulement nécessaire pour enrouler le filé (Y) de manière que la longueur de fil soit réglée à une longueur prédéterminée.
